# EUROPEAN PATENT SPECIFICATION

(11) **EP 3 665 538 B1**
(45) Date of publication and mention of the grant of the patent: **08.12.2021**
(21) Application number: 18846359.0
(22) Date of filing: 13.08.2018
(51) Int. Cl.: G05D 1/06

(54) **AUTOMATIC TAKEOFF AND LANDING BY AN AIRCRAFT**
AUTOMATISCHES STARTEN UND LANDEN EINES FLUGZEUGES
DÉCOLLAGE ET ATTERRISSAGE AUTOMATIQUES PAR UN AÉRONEF

(30) Priority: 13.08.2017 IL 25397017
(43) Date of publication of application: 17.06.2020
(73) Proprietor: Israel Aerospace Industries Ltd., 7010000 Lod (IL)
(72) Inventor: REFAEL, Yacov, 4744559 Ramat-HaSharon (IL); ZAAROUR, Ido, 6347116 Tel-Aviv (IL)
(74) Representative: Arnold & Siedsma
(86) International application number: PCT/IL2018/050896
(87) International publication number: WO 2019/035123

(56) References cited:
- EP-A1- 1 586 969
- EP-A1- 1 586 969
- EP-A1- 3 364 557
- WO-A1-94/10582
- WO-A1-2017/065486
- WO-A1-2017/065486
- US-A- 5 600 329
- US-B1- 6 178 363
- KEISER B E: "Unified Control Systems", IEEE TRANSACTIONS ON AEROSPACE AND ELECTRONIC SYSTEMS, IEEE SERVICE CENTER, PISCATAWAY, NJ, US, vol. AES-10, no. 5, 1 September 1971 (1971-09-01), pages 809-829, XP011167813, ISSN: 0018-9251

## Description

### FIELD OF THE PRESENTLY DISCLOSED SUBJECT MATTER

The presently disclosed subject matter relates to the field of aircraft control and specifically to aircraft control during takeoff and landing.

### BACKGROUND

Unmanned aerial vehicles (UAVs, otherwise known as remotely piloted aircraft (RPA) or remotely piloted aircraft system (RPAS)), which are predominantly used for military and special operation applications, are today becoming increasingly popular in civilian use. UAVs are used in a large variety of applications including, for example, traffic monitoring, remote sensing and reconnaissance, transportation, search and rescue, domestic policing, communication relaying, and more.

A UAV is controlled and monitored from takeoff, through flight and mission performance, and until landing. The operation of a UAV throughout its mission is controlled by an aircraft control station which is manned by an aircraft control station operator.

WO2017/065486 discloses a communication system for an unmanned aerial vehicle comprising a mounted communication apparatus, mounted on an unmanned aerial vehicle, for communicating by means of a previously configured frequency band; and a ground communication apparatus for communicating with the mounted communication apparatus by means of the previously configured frequency band.

An article by of Keiser B E, entitled: "Unified Control Systems" (IEEE TRANSACTIONS ON AEROSPACE AND ELECTRONIC SYSTEMS, IEEE SERVICE CENTER, PISCATAWAY, NJ, US, Vol. AES-10, no. 5, 1 September 1971, pages 809-829, XP011167813, ISSN: 0018-9251), discloses a survey of the subject of unified control systems for the guidance of unmanned vehicles, such as pilotless aircraft and satellites. Unified refers to the fact that the tracking, telemetry, and command functions are performed using a single RF channel and, at least ideally, a single set of equipment.

EP1586969 discloses an automatic takeoff apparatus for an aircraft.

US5600329 discloses a plurality of DGPS receivers which are employed to determine receiver-satellite-specific differential correction values. In turn, satellite-specific differential correction values are determined as an average of the individual receiver-satellite-specific differential correction values for each of the tracked satellites. A discriminator is employed for determining a receiver-satellite-specific discriminant which may be sampled and subsequent determination of a receiver-satellite-specific statistical value thereof. The receiver-satellite-specific statistical values may then be employed for determination of a Detection Threshold value and other integrity information associated with each of the satellite-specific differential correction values. A ground station further includes a means for communicating the satellite-specific differential correction values and integrity information associated therewith to a DGPS airborne receiver. An DGPS airborne system is configured to include a mechanization for receiving the satellite-specific differential correction values and integrity information associated therewith. An airborne integrity monitoring system is used to derive particular integrity limit values associated with the DGPS derived position for pilot awareness as to whether or not the pilot should rely upon the DGPS solution for a precision landing.

WO9410582 discloses an aircraft landing system in which a differential GPS global positioning system is employed. A ground station, located in the vicinity of one or more landing strips, includes a GPS receiver and a data link transmitter for transmitting GPS correction data and also the global position of two points which define a desired aircraft glide path associated with a particular landing strip.

### GENERAL DESCRIPTION

During takeoff or landing (TOL) of an aircraft accurate position data is required in order to enable safe TOL. Conventionally, an aircraft is controlled during TOL by a pilot, or in case of a UAV by a trained operator of an aircraft control station, where the aircraft and the control station maintains a line of sight (LOS) to enable the operator to guide it through the TOL process.

A UAV system normally comprises an aircraft control station (sometimes known as ground control unit (GCU)) at one location and a UAV, typically carrying some type of payload (e.g. a sensing unit such as a camera and\or RADAR), which is airborne at another location. The aircraft control station is configured to enable an operator of the aircraft control station to monitor and control the operation of a respective UAV. Control of the UAV can include both control over the operation of the UAV flight, as well as control over the operation of various payloads which may be installed on the UAV. Aircraft control station can communicate with UAV over an LOS communication link and/or satellite based communicating link (also known as beyond line of sight (BLOS)).

In those cases where the UAV is operated at a location remote from the aircraft control station a handover process is performed before TOL. During the handover process, control over the UAV is transferred between a first aircraft control station communicating via a BLOS communication link and a second aircraft control station, located in the area of the landing/takeoff site and capable of communicating with the UAV via a LOS communication link. The handover process ensures that LOS communication, which allows more accurate control over the UAV, is available during TOL. This of course requires to maintain a fully functional aircraft control station manned by trained operators at the vicinity of the TOL area of the UAV in addition to the aircraft control station which is located remote from the UAV deployment area and is used for controlling the UAV while airborne.

The presently disclosed subject matter includes an aircraft control system and an aircraft operating method which enable to control an aircraft (e.g. a UAV) by a remote aircraft control station communicating over a BLOS communication link with the aircraft, without the need to deploy an aircraft control station at the TOL site located remotely from the aircraft control station.

As the aircraft control station is located remotely from the UAV and TOL, according to the approach suggested herein automatic takeoff or landing (ATOL) is implemented. ATOL is required in order to safely land the aircraft. Accurate positioning data, which is required for execution of the ATOL, can be obtained by a positioning system which is located within LOS communication range from the UAV. For example differential global position system (DGPS) provides positioning data sufficiently accurate for TOL. According to the presently disclosed subject matter a remote takeoff and landing support (TLS) unit is deployed at the TOL site. the TLS unit comprises a DGPS which provides to the aircraft the accurate positioning data required to enable ATOL execution.

According to one aspect of the presently disclosed subject matter there is provided a an aircraft control system enabling automatic takeoff or landing (denoted by "ATOL") of an aircraft, the system comprising:
an aircraft control station configured to communicate over a beyond line of sight (denoted by "BLOS") communication link with the aircraft;
a takeoff and landing support (denoted by "TLS") unit, being physically separated from the aircraft control station, and configured to communicate over a line of sight (denoted by "LOS") communication link with the aircraft;
an ATOL subsystem mountable on an aircraft and configured to execute automatic takeoff or landing (denoted by "TOL");
wherein during takeoff or landing:
   the aircraft control station is configured to provide, over the BLOS communication link, navigation instructions allowing the ATOL subsystem onboard the aircraft to control the aircraft during TOL;
   the TLS unit is configured to provide to the ATOL subsystem onboard the aircraft, over the LOS communication link, DGPS positioning data;
   the ATOL subsystem is configured to integrate the DGPS positioning data with native positioning data acquired by an onboard GPS device to thereby generate augmented positioning data; and generate instructions for controlling the aircraft during TOL, based on the augmented positioning data and the navigation instructions.

Additional to the above features, the system according to this aspect of the presently disclosed subject matter can optionally comprise one or more of features (i) to (iii) below, mutatis mutandis, in any technically possible combination or permutation.
i) The aircraft control system, wherein the TLS unit comprises an abort control device and is configured, responsive to an abort command generated responsive to interaction with the abort control device, to transmit an abort command over the LOS communication link to the aircraft; the ATOL subsystem is configured, responsive to an abort command received from the TLS unit, to abort TOL.
ii) The aircraft control system, wherein the aircraft is airborne at a remote location with respect to the location of the aircraft control station such that the range between the aircraft and the aircraft control station can communicate only by BLOS communication.
iii) The aircraft control system, wherein the aircraft is an unmanned aerial vehicle (UAV).

According to another aspect of the presently disclosed subject matter there is provided a method of controlling an aircraft during takeoff or landing (denoted by" TOL"), the method comprising:
at an automatic takeoff or landing (denoted by" ATOL") subsystem mounted on an aircraft, using one or more computer processors for:
receiving over a beyond land of sight (denoted by "BLOS") communication link instructions allowing the ATOL subsystem onboard the aircraft to execute an ATOL process; the instructions are generated at an aircraft control station located remotely from the aircraft;
receiving from a takeoff and landing support (denoted by "TLS") unit being physically separated from the aircraft control station and located in close proximity of the aircraft, over a ling of sight (denoted by "LOS") communication link, DGPS positioning data;
integrating the DGPS positioning data with native positioning data to thereby generate augmented positioning data; and
generating TOL instructions for controlling the aircraft during TOL, based on the augmented positioning data and the instructions generated at the aircraft control station.

Additional to the above features, the method according to this aspect of the presently disclosed subject matter can optionally comprise one or more of features (i) to (iv) below, mutatis mutandis, in any technically possible combination or permutation.
i) The method further comprising, operating one or more flight control devices according to the instructions for executing TOL.
ii) The method further comprising:
   at the TLS unit, using one or more computer processor for:
   generating an abort command in response to user interaction with an abort control device in the TLS unit;
   generating instructions to abort the TOL in response to the received abort command;
   transmitting the instruction to the ATOL subsystem; and
   at the ATOL subsystem:
      aborting the TOL in accordance with the abort command.
iii) The method, wherein the aircraft is a UAV.
iv) The method further comprising:
   receiving at the aircraft, over the BLOS communication link, flight instructions received from the aircraft control station, located remotely from the aircraft and directed for controlling the aircraft during flight.

According to another aspect of the presently disclosed subject matter there is provided a non-transitory program storage device readable by a computer, tangibly embodying a computer readable instructions executable by the computer to perform a method of controlling an aircraft during takeoff or landing (TOL), the method comprising:
operating an ATOL subsystem mounted on an aircraft comprising:
receiving over a BLOS communication link instructions allowing the ATOL subsystem onboard the aircraft to execute an ATOL process; the instructions are generated at an aircraft control station located remotely from the aircraft;
receiving from a takeoff and landing support (TLS) unit being physically separated from the aircraft control station and located in close proximity of the aircraft, over a LOS communication link, DGPS positioning data;
integrating the DGPS positioning data with native positioning data to thereby generate augmented positioning data; and
generating TOL instructions for controlling the aircraft during TOL, based on the augmented positioning data and the instructions generated at the aircraft control station.

The computer storage device disclosed in accordance with the presently disclosed subject matter can optionally comprise one or more of features (i) to (iv) listed above, mutatis mutandis, in any technically possible combination or permutation.

### BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:
**Error! Reference source not found.1** is a schematic illustration of an aircraft control system, in accordance with some examples of the presently disclosed subject matter;
**Fig. 2** is a block diagram schematically illustrating an aircraft control system, in accordance with some examples of the presently disclosed subject matter;
**Fig. 3** is a flowchart showing an example of operations carried out as part of an automatic landing process, in accordance with some examples of the presently disclosed subject matter;
**Fig. 4** is a flowchart showing an example of operations carried out as part of an automatic takeoff process, in accordance with some examples of the presently disclosed subject matter

### DETAILED DESCRIPTION

Elements in the drawings are not necessarily drawn to scale. Unless specifically stated otherwise, as apparent from the following discussions, it is appreciated that throughout the specification discussions utilizing terms such as "receiving", "transmitting", "generating", "integrating", "executing" or the like, include actions and/or processes of a computer that manipulate and/or transform data into other data, said data represented as physical quantities, e.g. such as electronic quantities, and/or said data representing the physical objects.

Units **101, 103** and onboard ATOL subsystem described below, comprise or are otherwise operatively connected to one or more computer devices. The terms "computer", "computer device", "computerized device", "computer system", or variation thereof should be expansively construed to include any kind of electronic device with a processing circuitry capable of data processing and which includes one or more computer processors operatively connected to a computer memory (optionally including non-transitory computer memory) operating together for executing and/or generating instructions. Examples of such a device include: digital signal processor (DSP), a microcontroller, a field programmable gate array (FPGA), an application specific integrated circuit (ASIC), a personal computer, server computer device, a dedicated processing device, etc.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure or characteristic described in connection with the embodiment(s) is included in at least one embodiment of the presently disclosed subject matter. Thus the appearance of the phrase "one case", "some cases", "other cases" or variants thereof does not necessarily refer to the same embodiment(s).

It is appreciated that certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

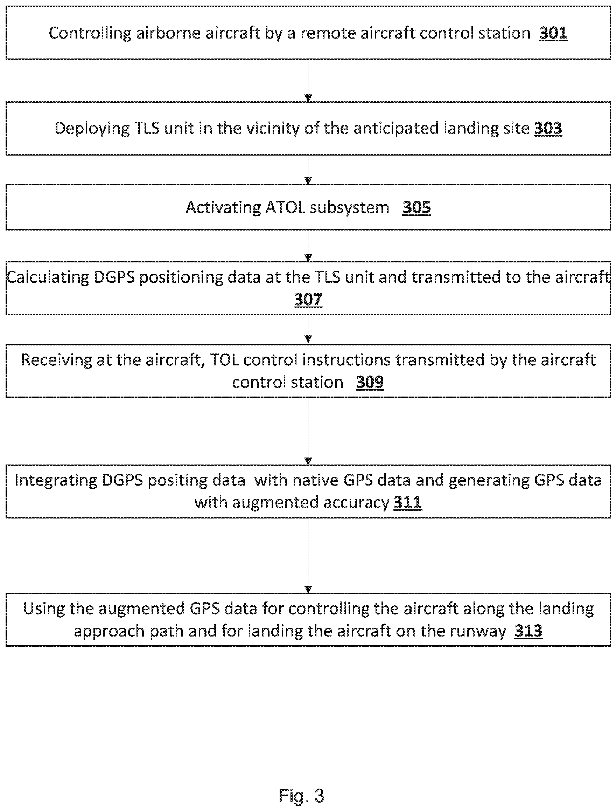

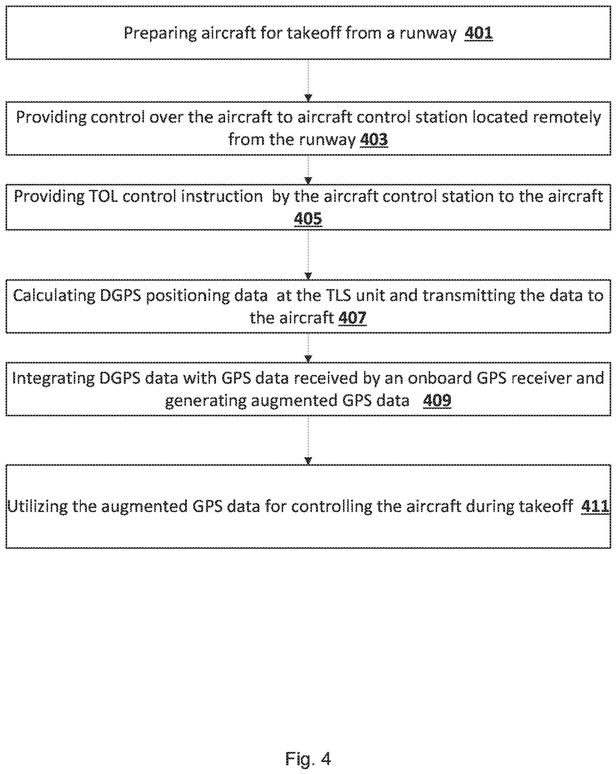

In embodiments of the presently disclosed subject matter, fewer, more and/or different stages than those shown in Figs. **3** and **4** may be executed. Also the order of execution of the described operations should not be limited to the order which is presented in the figures.

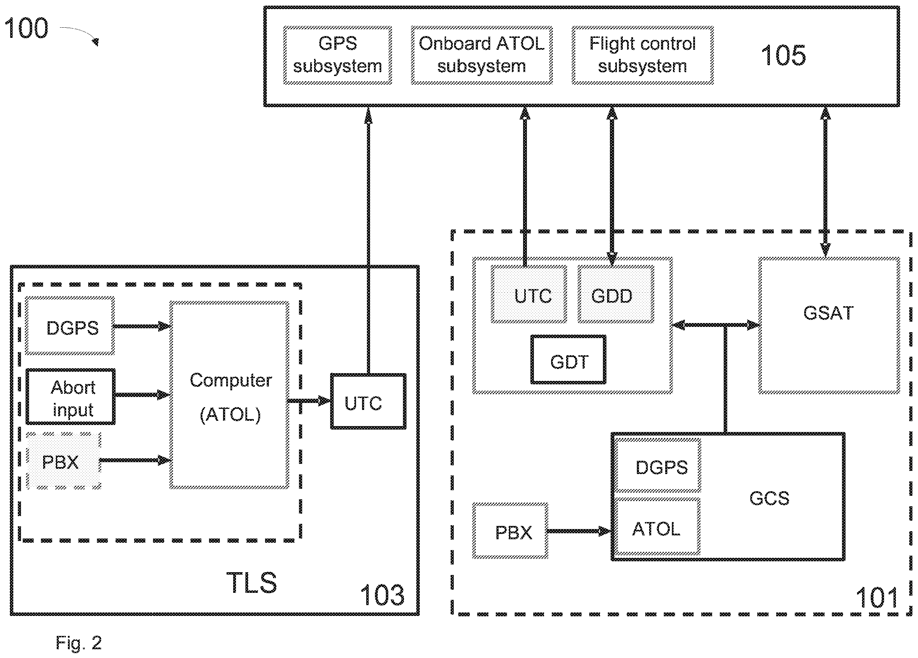

Figs. **2** is a schematic illustration of a system in accordance with some examples of the presently disclosed subject matter. Components in Fig. **2** may be centralized in one location or dispersed over more than one location. In other embodiments of the presently disclosed subject matter, the system may comprise fewer, more, and/or different modules than those shown in Fig. **2****.**

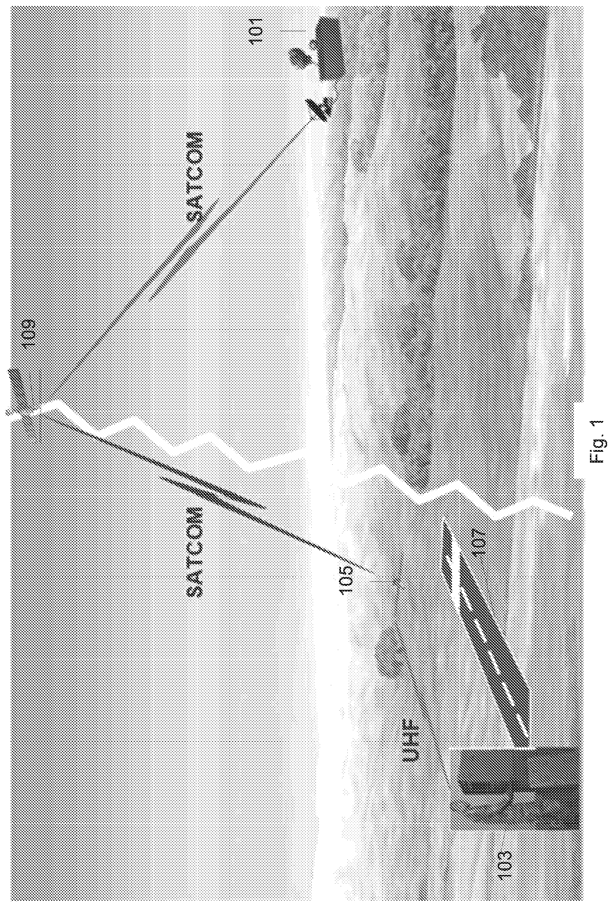

Bearing the above in mind, attention is now drawn to Fig. **1** showing a schematic illustration of an operative aircraft control system **100,** according to some examples of the presently disclosed subject matter. Fig. **1** shows a deployed aircraft control system comprising an aircraft control station **101,** a takeoff and landing support unit **103** and an aircraft **105** (e.g. UAV). Aircraft **105** is operating at an area which is remote from the location of deployment of the aircraft control station **101.** More specifically, a takeoff and landing runway (TLR) **107** is located remotely from the aircraft control station **101** and therefore communication between aircraft **105** and aircraft control station **101** is possible by BLOS communication only.

The term "remote" or any variation therefore is used herein to describe relative position of two communicating systems suitable only for beyond line of sight (BLOS) communication. This can be either due to the range between the two elements or due to objects, land cover or topography that obstructs line of sight communication. Thus, two communication devices which are located at remote locations, one with respect to the other, can communicate only by a BLOS communication link. Fig. **1** shows that satellite communication (SATCOM), via satellite **109,** is used for communicating between the aircraft control station **101** and the aircraft **105.**

The term "close proximity" is used herein to describe a relative position of two communicating systems suitable for LOS communication. In Fig. **1****,** different than aircraft control station **101,** TLS unit **103** is located in close proximity to the TLR **107** and therefore can communicate with the aircraft over a line of sight (LOS) communication link (using for example Ultra High Frequency (UHF) radio communication) during takeoff or landing of the aircraft.

Fig. **2** is a block diagram schematically illustrating aircraft control system, in accordance with some none limiting examples of the presently disclosed subject matter. As mentioned above, aircraft control system **100** comprises aircraft control station **101,** TLS unit **103** and an automatic takeoff and landing subsystem, which is mountable on an aircraft **105.** As apparent from Fig. **1** above, TLS unit **103** is physically separated from control station **101** where TLS is located in closed proximity to TLR **107** and control station **101** is located remotely from TLR **107.**

According to some examples, aircraft control station **101** comprises pilot box (PBX) comprising an operator console and configured to enable interaction with a ground aircraft control station (GCS) and control an aircraft (e.g. UAV). GCS can comprise for example, ATOL control system configured to execute and monitor automatic takeoff or landing, and DGPS configured to calculate and provide accurate positioning data errors, as known in the art.

GCS is further connected to ground data terminal (GDT) and ground satellite equipment (GSAT). GDT is configured to communicate (e.g. with an aircraft) over line of sight communication link (e.g. UHF transmitter and controller (UTC)) and GSAT is configured to communicate with the aircraft over satellite based (BLOS) communication link.

Notably , according to some examples the architecture of aircraft control station **101** can be designed in compliance with the requirements of STANAG 4586 which is the NATO specification of a core UAV control system (CUCS), however this is not always necessary.

TLS unit **103** comprises only a selected part of the functionalities of aircraft control station **101** and accordingly its dimensions and weight are significantly smaller than those of aircraft control station **101.** For example, TLS unit **103** may not comprise GSAT and is accordingly incapable of BLOS communication with the aircraft. Different than aircraft control station **101,** TLS unit **103** may be designed not to have full control over the flight of the aircraft (and possibly neither to have control over various payloads onboard the aircraft). In some examples TLS unit **103** is configured to have limited control over specific operations of the aircraft during TOL. Thus, unlike an aircraft control station **101,** operation of a TLS unit **103** does not require extensive training of operators.

TLS unit **103** comprises a computer device operatively connected to a DGPS and an LOS communication unit (e.g. UTC). This allows TLS **103** to calculate and transmit to an aircraft, over a LOS communication link, DGPS positioning data to thereby enable accurate positioning of the aircraft, during TOL. The computerized device can further comprise or be otherwise operatively connected to a PBX to enable user interaction with the TLS unit.

According to some examples TLS unit **103** further comprises an abort control device (which can be for example, any one of: a graphical user interface button displayed over a computer screen of TLS unit computer, physical abort button, key or lever, etc.) configured to allow an operator to issue an abort command for aborting TOL. Since TOL takes place at a remote area an abort input device is provided at the TLS unit to allow cancellation of the TOL process by a technician or flight supervisor operating the TLS unit who is located near the TOL site and has a line of sight with the aircraft, and to thereby increase TOL safety. for example, if the flight supervisor identifies that there is another aircraft on the runway, an abort command cancelling the landing or takeoff process can be issued to avoid dire consequences.

Aircraft **105** comprises a flight control subsystem, the flight control subsystem is configured to control the aircraft during ATOL and while airborne. Flight control subsystem, can be configured, responsive to flight instructions received over a BLOS communication link from aircraft control station **101,** to control the aircraft. Flight control subsystem can be operatively connected to various onboard flight control subsystems (including for example, rudder control unit, ailerons control unit, flap control unit, throttle control unit, etc.) and generate commands for controlling these subsystems according to the received instructions.

ATOL subsystem is mountable on aircraft **105** and configured to execute automatic takeoff or landing. In some examples, onboard ATOL subsystem can be operatively connected to flight control subsystem to facilitate control the aircraft during TOL. Activation of ATOL can be in response to received ATOL activation command, transmitted for example over a BLOS communication link from aircraft control station **101.** As explained further below onboard ATOL subsystem is configured to execute an ATOL process where DGPS data is received over a LOS communication link from TLS unit **103** and navigation instructions are received by BLOS communication link from aircraft control station **101.** The received DGPS data is integrated with native positioning data, determined by an onboard GPS subsystem to thereby obtain positioning data with augmented accuracy. Autonomous control over the aircraft during execution of ATOL is done according to navigation instructions and the augmented positioning data. This allows to perform TOL of the aircraft from a runway located remotely from the aircraft control station **101.**

Notably, an inherent delay in BLOS communication creates a time gap between the time when sensing data (e.g. images) is obtained by the aircraft at the landing site and a time the sensing data is received at the aircraft control station and a further time when a command for controlling the aircraft responsive to the sensing data, generated at the aircraft control station, is received and executed at the aircraft. Due to this inherent time delay in BLOS communication and the need for accurate control over the aircraft during TOL, TOL cannot be controlled from a remote aircraft control station even if the positioning data provided by the station is sufficiently accurate. Rather, as disclosed herein, ATOL is implemented instead.

Example of techniques for implementing ATOL are provided by way of example, in publication entitled "Advanced flight control technologies for UAVs" by Moshe Attar, Elias Wahonon and Doron Chaimovitz; Israeli Aircraft Industries - Engineering Division; 2end AIAA "Unmanned Unlimited" Systems, Technologies, and Operations -Aerospac 15-18 September 2003, San Diego, Californian.

Fig. **3** is a flowchart showing a sequence of operations carried out as part of automatic landing process, according to an example of the presently disclosed subject matter. Operations described with reference to Fig. **3** (as well as Fig. **4** below) can be executed by components of aircraft control system **100** described above. However, it is noted that reference made to specific components illustrated in Fig. **1** is made by way of example only and should not be construed as limiting.

At block **301** an airborne aircraft **105** is controlled by a remote aircraft control station **101.** As mentioned above due to the remoteness between the aircraft and the aircraft control station, communication between the two is facilitate by a BLOS communication link. In some examples, initial takeoff of the aircraft can be executed by the aircraft control station **101** from a runway located in close proximity to the aircraft control station **101.** Once airborne, the aircraft can be directed to fly to an area, where communication between aircraft and aircraft control station is only possible by a BLOS communication link.

At block **303** a TLS unit is deployed in the vicinity (close proximity) of the anticipated landing site, e.g. a takeoff and landing runway (TLR **107)** located remotely from the aircraft control station **101.** TLS unit can be deployed for example by small team of technicians (e.g. between 1 to 3 technicians). In to some examples, TLS unit is activated once the aircraft reaches an area close to the runway, e.g. once the aircraft is within LOS communication range. In some examples, operation of the TLS unit and/or communication between the aircraft and the TLS unit is initiated in response to a command transmitted from the aircraft control station **101.**

The aircraft can be controlled from the aircraft control station **101** until it reaches the remote runway. Before TOL onboard ATOL subsystem is activated (Block **305**). Activation of ATOL subsystem can be for example in response to an activation command received over BLOS communication from aircraft control station **101.**

At block **307** DGPS positioning data is calculated by a DGPS operatively connected to the TLS and transmitted to the aircraft using the LOS communication link. Transmitted DGPS positioning data is received for examples at onboard ATOL subsystem.

At block **309** TOL control instructions are transmitted from the aircraft control station **101** (over BLOS communication) to the aircraft. TOL control instructions can include for example, navigation instructions. Navigation instruction includes for example, coordinates of touchdown point on runway and of waypoints of predetermined landing approach path including and the like. TOL control instructions can also include a TOL activation command.

ATOL subsystem initiates the landing process, where the navigation data is used for controlling the aircraft along the approach path for landing. During autonomous navigation of the aircraft for landing, DGPS data is integrated with native GPS data (e.g. data determined by a GPS subsystem onboard the aircraft) and GPS data with augmented accuracy is generated based on the DGPS data (block **311**). The augmented GPS data is used for controlling the aircraft along the landing approach path and during actual landing of the aircraft on the runway (block **313**).

According to some examples if it is desired to abort the landing of the aircraft, an operator of the TLS unit can interact with the abort control device (e.g. press an abort button, or pull an abort lever) to thereby issue a landing abort command which is transmitted automatically to the aircraft. Responsive to the landing abort command the aircraft ceases the landing process e.g. can rise back to circle around the landing site. Examples of abort situations include an un-cleared runway, an un-cleared landing approach path, dangerous landing conditions e.g. bad weather, etc.

Fig. **4** is a flowchart showing a sequence of operations carried out as part of automatic takeoff process, according to an example of the presently disclosed subject matter.

At block **401** an aircraft **105** is prepared for takeoff from a runway. Preparation include for example positioning the aircraft on the runway in a ready to takeoff position and performing various pre-flight checks. At block **403** the control over the aircraft is given to an aircraft control station **101** located remotely from the runway, which can communicate with the aircraft over a BLOS communication link. At block **405** TOL control instructions are provided by the aircraft control station **101** to the aircraft from aircraft control station **101** over BLOS communication link. TOL control instructions can include for example, ATOL activation command for activating the onboard ATOL subsystem, TOL initiation command for initiating TOL and navigation instructions. Navigation instructions include for example, way points coordinates of takeoff route and of flight route for flying following takeoff.

At block **407** DGPS positioning data is calculated at the TLS unit and transmitted to the aircraft. Transmitted DGPS positioning data can be received for examples by onboard ATOL subsystem.

Following activation ATOL subsystem initiates a takeoff process, where the navigation data is used for controlling the aircraft during takeoff. During autonomous navigation of the aircraft, DGPS data is integrated with native GPS data (e.g. determined by a GPS subsystem onboard the aircraft) and GPS data with augment accuracy is generated based on the DGPS data (block **409**). The augmented GPS data is used for controlling the aircraft along the takeoff process and also later along the initial stages of the aircraft flight route (block **411**).

According to some examples if it is desired to abort the takeoff of the aircraft, the operator of the TLS unit can interact with the abort control device (e.g. press an abort button) to thereby issue a takeoff abort command which is transmitted automatically to the aircraft. Responsive to the takeoff abort command the aircraft ceases the takeoff process e.g. can stop on the runway before takeoff.

The presently disclosed subject matter enables to execute safe takeoff or landing of an aircraft at a TOL site located remotely from an aircraft control station. This approach helps to reduce costs and to simplify operation of the aircraft control station **100** as it does not require to deploy a fully functional aircraft control station at the TOL site and also does not require to accommodate trained aircraft control station operators at the TOL site. For example, a UAV aircraft control station can be located thousands of kilometers away from the operation area of the UAV and be used for controlling the UAV while airborne. During TOL, onboard ATOL subsystem is activated and controls the UAV while communicating with TLS unit for obtaining DGPS data needed for calculating accurate position data. Additional application of the disclosed system and method include for example: transferring aircrafts by flying rather than as cargo, to any destination lacking an aircraft control station and/or trained operators of an aircraft control station; training operators of aircraft control stations, where the aircraft control stations are located remotely from the TOL site of the aircrafts.

## Claims

1. An aircraft control system (100) enabling automatic takeoff or landing, denoted by "ATOL", of an aircraft, the system is **characterized in that**:
an aircraft control station (101) configured to communicate over a beyond line of sight, denoted by "BLOS", communication link with the aircraft;
a takeoff and landing support, denoted by "TLS", unit (103), being physically separated from the aircraft control station, and configured to communicate over a line of sight (denoted by "LOS") communication link with the aircraft;
an ATOL subsystem mountable on an aircraft (105) and configured to execute automatic takeoff or landing, denoted by "TOL",
wherein during takeoff or landing:
the aircraft control station (101) is configured to provide, over the BLOS communication link, navigation instructions allowing the ATOL subsystem onboard the aircraft (105) to control the aircraft (105) during TOL;
the TLS unit (103) is configured to provide to the ATOL subsystem onboard the aircraft (105), over the LOS communication link, DGPS positioning data;
the ATOL subsystem is configured to integrate the DGPS positioning data with native positioning data acquired by an onboard GPS device to thereby generate augmented positioning data; and generate instructions for controlling the aircraft (105) during TOL, based on the augmented positioning data and the navigation instructions.

2. The aircraft control system (100) of claim 1, wherein the TLS unit comprises an abort control device and is configured, responsive to an abort command generated responsive to interaction with the abort control device, to transmit an abort command over the LOS communication link to the aircraft; the ATOL subsystem is configured, responsive to an abort command received from the TLS unit, to abort TOL.

3. The aircraft control system (100) of any one of claims 1 and 2, wherein the aircraft is airborne at a remote location with respect to the location of the aircraft control station such that the range between the aircraft and the aircraft control station can communicate only by BLOS communication.

4. The aircraft control system (100) of any one of the preceding claims, wherein the aircraft is an unmanned aerial vehicle (denoted by "UAV").

5. The aircraft control system (100) of any one of the preceding claims, wherein the aircraft control station is configured to transmit to the ATOL subsystem TOL initiation instructions.

6. A method of controlling an aircraft during takeoff or landing, denoted by "TOL", the method comprising:
at an automatic takeoff or landing, denoted by "ATOL", subsystem mounted on an aircraft, using one or more computer processors for:
receiving over a beyond land of sight, denoted by "BLOS", communication link instructions allowing the ATOL subsystem onboard the aircraft to execute an ATOL process; the instructions are generated at an aircraft control station located remotely from the aircraft;
receiving from a takeoff and landing support, denoted by "TLS", unit being physically separated from the aircraft control station and located in close proximity of the aircraft, over a line of sight, denoted by "LOS", communication link, DGPS positioning data;
integrating the DGPS positioning data with native positioning data to thereby generate augmented positioning data; and
generating TOL instructions for controlling the aircraft during TOL, based on the augmented positioning data and the instructions generated at the aircraft control station.

7. The method of claim 6 further comprising, operating one or more flight control devices according to the TOL instructions.

8. The method of any one of claims 6 and 7 further comprising:
at the TLS unit, using one or more computer processor for:
generating an abort command in response to user interaction with an abort control device in the TLS unit;
generating instructions to abort the TOL in response to the abort command;
transmitting the instruction to the ATOL subsystem; and
at the ATOL subsystem:
aborting the TOL in accordance with the abort command.

9. The method of any one of claims 6 and 8, wherein the aircraft is a UAV

10. The method of any one of claims 6 and 9, wherein the instruction include navigation instruction for controlling the aircraft during TOL; the TOL instructions are generated also based on the navigation instructions.

11. The method according to any one of claim 6 to 8, wherein communication between the aircraft and the aircraft control station is possible only by a BLOS communication link.

12. A non-transitory program storage device readable by a computer of an ATOL according to claim 1 tangibly embodying a computer readable instructions executable by the computer to perform a method of controlling the aircraft during takeoff or landing (TOL), the method comprising:
operating the ATOL subsystem mounted on an aircraft comprising:
receiving over the BLOS communication link instructions allowing the ATOL subsystem onboard the aircraft to execute an ATOL process; the instructions are generated at the aircraft control station located remotely from the aircraft;
receiving from the takeoff and landing support (TLS) unit being physically separated from the aircraft control station and located in close proximity of the aircraft, over the LOS communication link, DGPS positioning data;
integrating the DGPS positioning data with native positioning data to thereby generate augmented positioning data; and
generating TOL instructions for controlling the aircraft during TOL, based on the augmented positioning data and the instructions generated at the aircraft control station.

## Patentansprüche

1. Luftfahrzeugsteuerungssystem (100) zum Ermöglichen von automatischem Starten oder Landen, als "ATOL" (Automatic Takeoff or Landing) bezeichnet, eines Luftfahrzeugs, wobei das System **gekennzeichnet ist durch**:
eine Luftfahrzeugsteuerstation (101), die dazu konfiguriert ist, über eine sogennante "BLOS"-Kommunikationsverbindung (Beyond Line of Sight, außerhalb der Sichtlinie) mit dem Luftfahrzeug zu kommunizieren;
eine Start- und Landehilfe-Einheit (103), als "TLS" (Takeoff and Landing Support)-Einheit bezeichnet, die physisch von der Luftfahrzeugsteuerstation getrennt ist und dazu konfiguriert ist, über eine sogennante "LOS"-Kommunikationsverbindung (Line Of Sight, Sichtlinie) mit dem Luftfahrzeug zu kommunizieren;
ein ATOL-Subsystem, das an einem Luftfahrzeug (105) montierbar und dazu konfiguriert ist, ein automatisches Starten oder Landen (als "TOL", Takeoff Or Landing, bezeichnet) auszuführen;
wobei während des Startens oder Landens:
die Luftfahrzeugsteuerstation (101) dazu konfiguriert ist, über die BLOS-Kommunikationsverbindung Navigationsanweisungen bereitzustellen, die es dem ATOL-Subsystem an Bord des Luftfahrzeugs (105) ermöglichen, das Luftfahrzeug (105) während des TOL zu steuern;
die TLS-Einheit (103) dazu konfiguriert ist, dem ATOL-Subsystem an Bord des Luftfahrzeugs (105) über die LOS-Kommunikationsverbindung DGPS-Positionierungsdaten bereitzustellen;
das ATOL-Subsystem so konfiguriert ist, dass es die DGPS-Positionierungsdaten mit nativen Positionierungsdaten integriert, die von einer Bord-GPS-Einrichtung erfasst werden, um dadurch erweiterte Positionierungsdaten zu erzeugen; und dass es während des TOL basierend auf den erweiterten Positionierungsdaten und den Navigationsanweisungen Anweisungen zum Steuern des Luftfahrzeugs (105) erzeugt.

2. Luftfahrzeugsteuerungssystem (100) nach Anspruch 1, wobei die TLS-Einheit eine Abbruchsteuerungsvorrichtung umfasst und dazu konfiguriert ist, als Reaktion auf einen als Reaktion auf eine Interaktion mit der Abbruchsteuerungsvorrichtung erzeugten Abbruchbefehl einen Abbruchbefehl über die LOS-Kommunikationsverbindung an das Luftfahrzeug zu übertragen, wobei ATOL-Subsystem dazu konfiguriert ist, als Reaktion auf einen von der TLS-Einheit empfangenen Abbruchbefehl, das TOL abzubrechen.

3. Luftfahrzeugsteuerungssystem (100) nach einem der Ansprüche 1 und 2, wobei das Luftfahrzeug in Bezug auf den Standort der Luftfahrzeugsteuerstation an einem entfernten Ort in der Luft ist, so dass die Entfernung zwischen dem Luftfahrzeug und der Luftfahrzeugsteuerstation nur über BLOS-Kommunikation kommunizieren kann.

4. Luftfahrzeugsteuerungssystem (100) nach einem der vorhergehenden Ansprüche, wobei das Luftfahrzeug ein unbemanntes Fluggerät ist (als "UAV" (Unmanned Aerial Vehicle) bezeichnet).

5. Luftfahrzeugsteuerungssystem (100) nach einem der vorhergehenden Ansprüche, wobei die Luftfahrzeugsteuerstation dazu konfiguriert ist, TOL-Einleitungsanweisungen an das ATOL-Subsystem zu übertragen.

6. Verfahren zum Steuern eines Luftfahrzeugs während des Startens oder Landens (als "TOL" (Takeoff Or Landing) bezeichnet), wobei das Verfahren Folgendes umfasst:
an einem ATOL-Subsystem (Subsystem zum automatischen Starten oder Landen, Automatic Takeoff Or Landing subsystem), das an einem Luftfahrzeug montiert ist, Verwenden eines oder mehrerer Computerprozessoren zum:
Empfangen von Anweisungen, und zwar über eine "BLOS"-Kommunikationsverbindung (Beyond Line of Sight, außerhalb der Sichtlinie), die es dem ATOL-Subsystem an Bord des Luftfahrzeugs ermöglichen, einen ATOL-Prozess auszuführen, wobei die Anweisungen an einer vom Luftfahrzeug entfernt angeordneten Luftfahrzeugsteuerstation erzeugt werden;
Empfangen von aus einer Start- und Landehilfe-Einheit (als "TLS" (Takeoff and Landing Support)-Einheit bezeichnet) stammenden DGPS-Positionierungsdaten über eine sogennante "LOS"-Kommunikationsverbindung (Line Of Sight, Sichtlinie), wobei die TLS-Einheit physisch von der Luftfahrzeugsteuerstation getrennt ist und sich in unmittelbarer Nähe des Luftfahrzeugs befindet;
Integrieren der DGPS-Positionierungsdaten mit nativen Positionierungsdaten, um dadurch erweiterte Positionierungsdaten zu erzeugen; und
Erzeugen von TOL-Anweisungen zum Steuern des Luftfahrzeugs während des TOL, basierend auf den erweiterten Positionierungsdaten und den an der Luftfahrzeugsteuerstation erzeugten Anweisungen.

7. Verfahren nach Anspruch 6, das ferner das Betreiben einer oder mehrerer Flugsteuerungsvorrichtungen gemäß den TOL-Anweisungen umfasst.

8. Verfahren nach einem der Ansprüche 6 und 7, ferner umfassend:
an der TLS-Einheit, Verwenden eines oder mehrerer Computerprozessoren zum:
Erzeugen eines Abbruchbefehls als Reaktion auf eine Benutzerinteraktion mit einer Abbruchsteuerungsvorrichtung der TLS-Einheit,
Erzeugen von Anweisungen zum Abbrechen des TOL als Reaktion auf den Abbruchbefehl, und
Übertragen der Anweisung an das ATOL-Subsystem; und
am ATOL-Subsystem:
Abbrechen des TOL gemäß dem Abbruchbefehl.

9. Verfahren nach einem der Ansprüche 6 und 8, wobei das Luftfahrzeug ein UAV ist.

10. Verfahren nach einem der Ansprüche 6 und 9, wobei die Anweisungen Navigationsanweisungen zum Steuern des Luftfahrzeugs während des TOL umfassen; wobei die TOL-Anweisungen auch basierend auf den Navigationsanweisungen erzeugt werden.

11. Verfahren nach einem der Ansprüche 6 bis 8, wobei eine Kommunikation zwischen dem Luftfahrzeug und der Luftfahrzeugsteuerstation nur durch eine BLOS-Kommunikationsverbindung möglich ist.

12. Nichtflüchtige Programmspeichervorrichtung, die von einem Computer eines ATOL nach Anspruch 1 gelesen werden kann, die computerlesbare Anweisungen konkret verkörpert, die durch den Computer ausführbar sind, um ein Verfahren zum Steuern des Luftfahrzeugs während des Startens oder Landens (TOL) durchzuführen, wobei das Verfahren Folgendes umfasst:
Betreiben des an einem Luftfahrzeug montierten ATOL-Subsystems, umfassend:
Empfangen von Anweisungen über die BLOS-Kommunikationsverbindung, die es dem ATOL-Subsystem an Bord des Luftfahrzeugs ermöglichen, einen ATOL-Prozess auszuführen, wobei die Anweisungen an der Luftfahrzeugsteuerstation erzeugt werden, die sich entfernt vom Luftfahrzeug befindet;
Empfangen von aus der Start- und Landehilfe- (TLS)-Einheit stammenden DGPS-Positionierungsdaten, und zwar über die LOS-Kommunikationsverbindung, wobei die TLS-Einheit physisch von der Luftfahrzeugsteuerstation getrennt ist und sich in unmittelbarer Nähe des Luftfahrzeugs befindet;
Integrieren der DGPS-Positionierungsdaten mit nativen Positionierungsdaten, um dadurch erweiterte Positionierungsdaten zu erzeugen; und
Erzeugen von TOL-Anweisungen zum Steuern des Luftfahrzeugs während des TOL, basierend auf den erweiterten Positionierungsdaten und den an der Luftfahrzeugsteuerstation erzeugten Anweisungen.

## Revendications

1. Système de commande d'aéronef (100) permettant le décollage ou l'atterrissage automatique, ci-après « ATOL » pour Automatic Takeoff or Landing, d'un aéronef, le système étant **caractérisé par** :
une station de commande d'aéronef (101) conçue pour communiquer avec l'aéronef par le biais d'une liaison de communication dite « au-delà de la visibilité directe », ci-après « BLOS »pour Beyond Line of Sight ;
une unité d'aide au décollage et à l'atterrissage (103), ci-après « TLS » pour Takeoff and Landing Support, qui est physiquement séparée de la station de commande d'aéronef, et conçue pour communiquer avec l'aéronef par le biais d'une liaison de communication dite « de visibilité directe », ci-après « LOS » pour Line Of Sight ;
un sous-système ATOL susceptible d'être monté sur un aéronef (105) et conçu pour exécuter un décollage ou atterrissage, ci-après « TOL » pour Takeoff Or Landing, automatique ;
étant donné que, pendant le décollage ou l'atterrissage :
la station de commande d'aéronef (101) est conçue pour fournir, par le biais de la liaison de communication BLOS, des instructions de navigation permettant au sous-système ATOL embarqué sur l'aéronef (105) de commander l'aéronef (105) pendant le TOL ;
l'unité TLS (103) est conçue pour fournir des données de positionnement DGPS au sous-système ATOL embarqué sur l'aéronef (105), par le biais de la liaison de communication LOS;
le sous-système ATOL est conçu pour intégrer les données de positionnement DGPS à des données de positionnement natives acquises par un dispositif GPS embarqué pour ainsi générer des données de positionnement augmentées ; et pour générer des instructions visant à commander l'aéronef (105) pendant le TOL, compte tenu des données de positionnement augmentées et des instructions de navigation.

2. Système de commande d'aéronef (100) selon la revendication 1, dans lequel l'unité TLS comprend un dispositif de commande d'interruption et est conçue, en réponse à une commande d'interruption générée en réponse à une interaction avec le dispositif de commande d'interruption, pour transmettre à l'aéronef une commande d'interruption par le biais de la liaison de communication LOS ; le sous-système ATOL étant conçu, en réponse à une commande d'interruption reçue en provenance de l'unité TLS, pour interrompre le TOL.

3. Système de commande d'aéronef (100) selon l'une quelconque des revendications 1 et 2, dans lequel l'aéronef est aéroporté en un emplacement distant eu égard à l'emplacement de la station de commande d'aéronef de telle façon que l'étendue entre l'aéronef et la station de commande d'aéronef ne peut communiquer que par communication BLOS.

4. Système de commande d'aéronef (100) selon l'une quelconque des revendications précédentes, dans lequel l'aéronef est un aéronef téléguidé (ci-après « UAV » pour Unmanned Aerial Vehicle).

5. Système de commande d'aéronef (100) selon l'une quelconque des revendications précédentes, dans lequel la station de commande d'aéronef est conçue pour transmettre des instructions d'amorce de TOL au sous-système ATOL.

6. Procédé de commande d'un aéronef pendant le décollage ou l'atterrissage, ci-après « TOL », ledit procédé comprenant :
au niveau d'un sous-système de décollage ou d'atterrissage automatique, ci-après « sous-système ATOL » pour Automatic Takeoff or Landing, monté sur un aéronef, l'utilisation d'un ou plusieurs processeurs informatiques pour :
recevoir, par le biais d'une liaison de communication dite « au-delà de la visibilité directe », ci-après « BLOS »pour Beyond Line of Sight, des instructions permettant au sous-système ATOL embarqué sur l'aéronef d'exécuter un processus d'ATOL ; les instructions étant générées au niveau d'une station de commande d'aéronef située à distance de l'aéronef ;
recevoir, en provenance d'une unité d'aide au décollage et à l'atterrissage (103), ci-après « TLS » pour Takeoff and Landing Support, physiquement séparée de la station de commande d'aéronef et située à toute proximité de l'aéronef, des données de positionnement DGPS, par le biais d'une liaison de communication dite « de visibilité directe », ci-après « LOS » pour Line Of Sight ;
intégrer les données de positionnement DGPS aux données de positionnement natives pour ainsi générer des données de positionnement augmentées ; et
générer des instructions de TOL visant à commander l'aéronef pendant le TOL, compte tenu des données de positionnement augmentées et des instructions générées au niveau de la station de commande d'aéronef.

7. Procédé selon la revendication 6 comprenant en outre l'exploitation d'un ou plusieurs dispositifs de commande de vol conformément aux instructions de TOL.

8. Procédé selon l'une quelconque des revendications 6 et 7, comprenant en outre :
au niveau de l'unité TLS, l'utilisation d'un ou plusieurs processeurs informatiques pour :
générer une commande d'interruption en réponse à une interaction de l'utilisateur avec un dispositif de commande d'interruption de l'unité TLS,
générer des instructions visant à interrompre le TOL en réponse à la commande d'interruption, et
transmettre l'instruction au sous-système ATOL ; et
au niveau du sous-système ATOL :
l'interruption du TOL conformément à la commande d'interruption.

9. Procédé selon l'une quelconque des revendications 6 et 8, dans lequel l'aéronef est un UAV.

10. Procédé selon l'une quelconque des revendications 6 et 9, dans lequel les instructions comprennent des instructions de navigation visant à commander l'aéronef pendant le TOL ; les instructions de TOL étant également générées compte tenu des instructions de navigation.

11. Procédé selon l'une quelconque des revendications 6 à 8, dans lequel la communication entre l'aéronef et la station de commande d'aéronef n'est possible que par liaison de communication BLOS.

12. Dispositif non transitoire de stockage de programme, lisible par un ordinateur d'un ATOL selon la revendication 1, matérialisant de manière tangible des instructions lisibles par ordinateur et exécutables par l'ordinateur pour réaliser le procédé de commande d'aéronef pendant le décollage ou l'atterrissage (TOL), ledit procédé comprenant :
l'exploitation du sous-système ATOL monté sur un aéronef comprenant :
la réception, par le biais de la liaison de communication BLOS, d'instructions permettant au sous-système ATOL embarqué sur l'aéronef d'exécuter un processus d'ATOL ; les instructions étant générées au niveau de la station de commande d'aéronef située à distance de l'aéronef,
la réception, en provenance de l'unité d'aide au décollage et à l'atterrissage (TLS) physiquement séparée de la station de commande d'aéronef et située à toute proximité de l'aéronef, de données de positionnement DGPS, par le biais de la liaison de communication LOS,
l'intégration des données de positionnement DGPS à des données de positionnement natives pour ainsi générer des données de positionnement augmentées, et
la génération d'instructions de TOL visant à commander l'aéronef pendant le TOL, compte tenu des données de positionnement augmentées et des instructions générées au niveau de la station de commande d'aéronef.
